# EUROPEAN PATENT APPLICATION

(11) **EP 4 147 915 A1**
(43) Date of publication of application: **15.03.2023**
(21) Application number: 20938888.3
(22) Date of filing: 03.06.2020
(51) Int. Cl.: B60R 16/023

(54) **VEHICLE CONTROL SYSTEM AND CONTROL SUBUNIT**

(71) Applicant: Huawei Technologies Co., Ltd., Longgang District, Shenzhen, Guangdong 518129 (CN)
(72) Inventor: LIU, Yalin, Shenzhen, Guangdong 518129 (CN); HAN, Xiaohui, Shenzhen, Guangdong 518129 (CN); CAI, Jianyong, Shenzhen, Guangdong 518129 (CN); CHEN, Xiaohua, Shenzhen, Guangdong 518129 (CN)
(74) Representative: Epping - Hermann - Fischer
(86) International application number: PCT/CN2020/094157
(87) International publication number: WO 2021/243602

(57) **Abstract**

Embodiments of this application disclose a vehicle control system and a sub-control unit, and relate to the field of intelligent vehicles. The vehicle control system includes a control unit and a sub-control unit. The sub-control unit proposed in this application is configured to upward connect to the control unit, and downward connect to a component. The sub-control unit is introduced, so that a cable harness length of a vehicle can be reduced, and diversified connection requirements of the component of the vehicle can be met.

## Description

### TECHNICAL FIELD

This application relates to the field of intelligent driving, and in particular, to a vehicle control system and a sub-control unit.

### BACKGROUND

A conventional electronic and electrical architecture (electronic and electrical architecture, EEA) in the automotive industry is a bus and decentralized control architecture. As vehicles are more intelligent and electrified, a quantity of in-vehicle electronic control units (electronic control unit, ECU) explosively increases. An original EEA is difficult to meet a vehicle intelligentization development requirement. Therefore, a computing and communication architecture (computing and communication architecture, CCA) based on "computing + communication" is proposed.

Currently, some CCA architectures each include three platforms: an intelligent driving platform, also referred to as a mobile data center (mobile data center, MDC); an intelligent cockpit platform, also referred to as a cockpit domain controller (cockpit domain controller, CDC); and a vehicle control platform, also referred to as a vehicle domain controller (vehicle domain controller, VDC). The three platforms may be collectively referred to as an x domain controller/data center (x Domain Controller/Data Center, xDC).

In a vehicle intelligentization process, a quantity of components further increases, and vehicle components need to be connected to the xDC. It is considered that currently there is a relatively large quantity of vehicle components, and a relatively long total cable harness is required for connecting all the vehicle components to the xDC. Further, a vehicle weight is increased due to the relatively long cable harness, affecting vehicle use economy.

### SUMMARY

Embodiments of this application provide a vehicle control system. A sub-control unit proposed in this application is connected to a component and a control unit, so that a cable harness length can be reduced, and diversified connection requirements of the component can be met.

According to an aspect, a vehicle control system is provided, including: a control unit; and a first sub-control unit, where the first sub-control unit is connected to a first component that meets a first preset condition, and the first sub-control unit is configured to: obtain first data sent by the first component, and send first control information to the first component, where the first component includes a sensor or an actuator; and the first sub-control unit is connected to the control unit, and the first sub-control unit is configured to: send second data to the control unit, and obtain second control information sent from the control unit.

The sub-control unit is introduced to the vehicle control system. The sub-control unit is connected to the first component that meets the first preset condition, and upward connected to the control unit, so that the sub-control unit can obtain the data sent by the component, and send the control information to the component; and can further send the data to the control unit, and receive the control information sent by the control unit. A topology structure of the vehicle control system is properly arranged by using the sub-control unit, so that an electronic and electrical architecture of a vehicle is improved to be a new computing and communication architecture. The vehicle control system can further improve system performance, reduce a cable harness length, meet diversified connection requirements of the component, or the like.

In a possible implementation of the first aspect, the first preset condition includes: a component and the first sub-control unit are disposed in a preset location area. Optionally, a distance between the component and the first sub-control unit is less than or equal to a first threshold.

In the vehicle control system, based on the first preset condition, the first component is relatively adjacent to the first sub-control unit in physical location, and the sub-control unit may be disposed in a same physical location area as the first component. Therefore, in the vehicle control system, a short cable harness and low costs are required for connecting the component to the sub-control unit, a cable harness topology structure is simple, and installation and maintenance are facilitated.

In a possible implementation of the first aspect, the first preset condition includes one or more of the following: a component is disposed in a preset location area; a function executed by the component is a preset function; a data interface type of the component is a first preset type; a data transmission protocol type of the component is a second preset type; a security level of data of the component is a first preset level; a service level of the data of the component is a second preset level; and a manufacturer identifier of the component is a second preset value.

In the vehicle control system, the component connected to the first sub-control unit meets the first preset condition, and diversified connection requirements of the component can be met based on specific content of the first preset condition. For example, component sets are obtained through classification based on different functions, and different sub-control units are connected to components with different functions. This facilitates coordination between components, so that data can be quickly processed, thereby improving system performance.

In a possible implementation of the first aspect, the first sub-control unit is connected to the first component by using a wired network or a wireless network; the wired network is a network constructed according to one or a combination of a plurality of a controller area network (controller area network, CAN), a local interconnect network (local interconnect network, LIN), FlexRay, Ethernet (Ethernet), or a peripheral component interconnect express (peripheral component interconnect express, PCIe); and the wireless network is a network constructed according to one or a combination of a plurality of wireless fidelity (Wi-Fi), Bluetooth, or a cellular mobile network.

In the vehicle control system, the sub-control unit and the component may be interconnected by using a plurality of types of networks. Specifically, all components may be connected to the sub-control unit in a same manner or different manners. Therefore, different connection network requirements of different components can be met.

In a possible implementation of the first aspect, the first sub-control unit is connected to the control unit by using a wired network, and the wired network includes Ethernet or PCIe. Optionally, the wired network includes a CAN, an LIN, a FlexRay network, Ethernet, or PCIe, and the wireless network includes Wi-Fi, Bluetooth, or a cellular mobile network.

In the vehicle control system, the sub-control unit, and the control unit may be interconnected by using a plurality of types of networks, and a network transmission rate of Ethernet or PCIe is relatively high, so that a requirement of high-speed data transmission between the sub-control unit and the control unit can be met. In addition, other network connections of different types can be alternatively selected based on actual network requirements of the sub-control unit and the control unit.

In a possible implementation of the first aspect, the vehicle control system further includes a second sub-control unit, where the second sub-control unit is connected to a second component that meets a second preset condition, the second preset condition is different from the first preset condition, and the second sub-control unit is configured to: obtain third data sent by the second component, and send third control information to the second component; and the second sub-control unit is connected to the control unit, and the second sub-control unit is configured to: send fourth data to the control unit, and obtain fourth control information sent from the control unit.

The vehicle control system further includes the second sub-control unit, and the second sub-control unit is connected to the second component that meets the second preset condition. Therefore, a plurality of sub-control units are disposed based on connection requirements of components, thereby increasing flexibility of solution implementation.

In a possible implementation of the first aspect, the first sub-control unit is configured to implement all or some electronic control unit functions of the first component.

In the vehicle control system, the first sub-control unit is configured to implement all or some electronic control unit functions of the first component. Usually, a data processing capability and an operation capability of the first sub-control unit are stronger than those of the component. The electronic control unit function is upward transferred to the first sub-control unit, so that system performance can be improved, and component production costs can be reduced. In a possible implementation of the first aspect, the sub-control unit is configured to implement all or some electronic control unit functions of each of the plurality of components.

In the vehicle control system, all or some electronic control unit functions of each component may be upward transferred to the first sub-control unit, so that component production costs can be reduced, and further coordination between components can be facilitated, thereby improving system performance.

In a possible implementation of the first aspect, the first sub-control unit is further configured to convert the first data transmitted according to a first transmission protocol into the second data transmitted according to a second transmission protocol, where the first transmission protocol includes a CAN, an LIN, a FlexRay network, Ethernet, PCIe, Wi-Fi, Bluetooth, or a cellular mobile network, the second transmission protocol includes Ethernet or PCIe, and the first transmission protocol is different from the second transmission protocol.

In the vehicle control system, based on different service requirements, a protocol type of data transmission between the component and the sub-control unit is usually different from a protocol type of data transmission between the sub-control unit and the control unit. The sub-control unit may be configured to convert a transmission protocol, and different transmission protocols may be used for data transmission between the component and the sub-control unit based on specific requirements such as a data transmission rate, to meet diversified connection requirements of the component.

In a possible implementation of the first aspect, the vehicle control system further includes at least one of a mobile data center, a cockpit domain controller, and a vehicle domain controller; and the control unit is connected to the at least one of the mobile data center, the cockpit domain controller, or the vehicle domain controller.

The vehicle control system further includes the at least one of the mobile data center, the cockpit domain controller, and the vehicle domain controller, and the at least one of the mobile data center, the cockpit domain controller, and the vehicle domain controller is connected to the control unit. The MDC is configured to control intelligent driving, the CDC is configured to control an intelligent cockpit, and the VDC is configured to control vehicle power, so that a vehicle intelligentization development requirement can be met.

According to a second aspect, a vehicle control method is provided. The vehicle includes a control unit, a first sub-control unit, and a first component, and the method includes: the first sub-control unit receives first control information sent by the control unit; and the first sub-control unit controls the first component based on the control information. In the vehicle control method, the first sub-control unit may receive the first control information sent by the control unit, and control the first component based on the first control information. This avoids a case in which an electronic control unit in each component separately controls the component in a conventional vehicle control system, to simplify an electronic control unit function of the component, thereby helping reduce electronic control unit costs of the component and finally reduce costs of the component. The first sub-control unit may further more flexibly control the component of the vehicle, to improve vehicle control system performance.

In a possible implementation of the second aspect, the method further includes: the first sub-control unit obtains first data sent by the first component; and the first sub-control unit sends the first data to the control unit.

In the vehicle control method, the first sub-control unit may implement a data forwarding function. This avoids a case in which an electronic control unit in each component separately implements a data forwarding function in a conventional vehicle control system, to simplify an electronic control unit function of the component, thereby helping reduce electronic control unit costs of the component and finally reduce costs of the component.

In a possible implementation of the second aspect, the method further includes: the first sub-control unit obtains second data sent by the first component; the first sub-control unit processes the second data to obtain third data, where the processing includes one or more of the following operations: performing data processing on the second data, encapsulating the second data according to a transmission protocol, performing protocol conversion on the second data, and performing data format conversion on the second data; and the first sub-control unit sends the third data to the control unit.

In the vehicle control method, the first sub-control unit may process the data. The first sub-control unit is closer to the vehicle component, that is, a system edge side, than the control unit, and therefore can rapidly process the data, to give full play to an advantage of edge computing, thereby improving vehicle control system performance.

In a possible implementation of the second aspect, the first sub-control unit is configured to implement all or some electronic control unit functions of the first component.

In the vehicle control method, the first sub-control unit is configured to implement all or some electronic control unit functions of the first component. This avoids a case in which an electronic control unit in each component separately controls the component in a conventional vehicle control system, to simplify an electronic control unit function of the component, thereby helping reduce electronic control unit costs of the component and finally reduce costs of the component.

In a possible implementation of the second aspect, the vehicle includes at least one of a mobile data center, a cockpit domain controller, and a vehicle domain controller, and the control unit is connected to the at least one of the mobile data center, the cockpit domain controller, or the vehicle domain controller; and the first control information is control information sent by the at least one of the mobile data center, the cockpit domain controller, or the vehicle domain controller to the control unit.

In the vehicle control method, a plurality of components may be connected to one control unit by using the sub-control unit, and connected to the at least one of the mobile data center, the cockpit domain controller, and the vehicle domain controller by using the control unit. This avoids a case in which all components in a conventional vehicle control system need to be connected to at least one of a mobile data center, a cockpit domain controller, and a vehicle domain controller by using respective cable harnesses, thereby helping reduce a cable harness length in a system that implements a vehicle control function.

According to a third aspect, a vehicle control method is provided. The vehicle includes a control unit, a first sub-control unit, and a first component, and the method includes: the first sub-control unit obtains first data sent by the first component; and the first sub-control unit sends second data to the control unit based on the first data.

In the vehicle control method, the first sub-control unit may obtain the first data sent by the first component, and send the second data to the control unit. This avoids a case in which all components in a conventional vehicle control system need to be connected to a control unit by using respective cable harnesses and send data to the control unit, so that a cable harness length in the vehicle can be reduced, a cable harness weight can be reduced, and vehicle energy consumption can be reduced.

In a possible implementation of the third aspect, that the first sub-control unit sends second data to the control unit based on the first data includes: the first sub-control unit forwards the first data to the control unit, where the first data is the same as the second data.

In the vehicle control method, the first sub-control unit may implement a data forwarding function. This avoids a case in which an electronic control unit in each component separately implements a data forwarding function in a conventional vehicle control system, to simplify an electronic control unit function of the component, thereby helping reduce electronic control unit costs of the component and finally reduce costs of the component.

In a possible implementation of the third aspect, that the sub-control unit sends second data to the control unit based on the first data includes: the first sub-control unit processes the first data to obtain the second data, and sends the second data to the control unit, where the processing includes one or more of the following operations: performing data processing on the first data, performing protocol conversion on the first data, encapsulating the first data according to a transmission protocol, and performing data format conversion on the first data.

In the vehicle control method, the first sub-control unit may process, perform protocol conversion on, or encapsulate the data. The first sub-control unit is closer to the vehicle component, that is, a system edge side, than the control unit, and therefore can rapidly process the data, to give full play to an advantage of edge computing, thereby improving vehicle control system performance.

In a possible implementation of the third aspect, the first sub-control unit is configured to implement all or some electronic control unit functions of the first component.

In the vehicle control method, the first sub-control unit is configured to implement all or some electronic control unit functions of the first component. This avoids a case in which an electronic control unit in each component separately controls the component in a conventional vehicle control system, to simplify an electronic control unit function of the component, thereby helping reduce electronic control unit costs of the component and finally reduce costs of the component.

In a possible implementation of the third aspect, the method further includes: the first sub-control unit receives first control information sent by the control unit; and the first sub-control unit controls the first component based on the first control information.

In the vehicle control method, the first sub-control unit may receive the first control information sent by the control unit, and control the first component based on the first control information. This avoids a case in which an electronic control unit in each component separately controls the component in a conventional vehicle control system, to simplify an electronic control unit function of the component, thereby helping reduce electronic control unit costs of the component and finally reduce costs of the component. The first sub-control unit may further more flexibly control the component of the vehicle, to improve vehicle control system performance.

In a possible implementation of the third aspect, the vehicle includes a mobile data center, a cockpit domain controller, and a vehicle domain controller, and the control unit is connected to at least one of the mobile data center, the cockpit domain controller, or the vehicle domain controller; and the method further includes: the first control information is control information sent by the at least one of the mobile data center, the cockpit domain controller, or the vehicle domain controller to the control unit.

In the vehicle control method, a plurality of components may be connected to one control unit by using the sub-control unit, and connected to the at least one of the mobile data center, the cockpit domain controller, and the vehicle domain controller by using the control unit. This avoids a case in which all components in a conventional vehicle control system need to be connected to at least one of a mobile data center, a cockpit domain controller, and a vehicle domain controller by using respective cable harnesses, thereby helping reduce a cable harness length in a system that implements a vehicle control function.

According to a fourth aspect, a sub-control unit is provided, including a processor, a memory, and a network interface. The processor and the memory are interconnected, the memory is configured to store a computer program, the computer program includes program instructions, the processor is configured to invoke the program instructions, and the network interface is configured to connect to a component and a control unit in the vehicle control system according to any one of the first aspect and the various possible implementations.

According to a fifth aspect, a sub-control unit is provided, including a processor, a memory, and a network interface. The processor and the memory are interconnected, the memory is configured to store a computer program, the computer program includes program instructions, and the processor is configured to invoke the program instructions to execute the vehicle control method according to any one of the second aspect, the third aspect, and the various possible implementations.

According to a sixth aspect, a computer program product including instructions is provided. When the computer program product is run on a computer, the computer is enabled to execute the methods according to the implementations provided in the second aspect and the third aspect.

According to a seventh aspect, a computer-readable storage medium is provided. When the computer-readable storage medium is run on a computer, the computer is enabled to execute the methods according to the implementations provided in the second aspect and the third aspect.

According to an eighth aspect, an intelligent vehicle is provided, including the vehicle control system according to any one of the first aspect and the various possible implementations.

In the vehicle control system provided in this application, the sub-control unit is added, and is configured to downward connect to the component and upward connected to the control unit. A topology structure of the vehicle control system is properly arranged by using the sub-control unit, so that an electronic and electrical architecture of the vehicle is improved to be a new computing and communication architecture. The vehicle control system can improve system performance, reduce a cable harness length, reduce vehicle costs, and meet diversified connection requirements of the component.

### BRIEF DESCRIPTION OF DRAWINGS

FIG. 1 is a schematic diagram of an electronic and electrical architecture of a vehicle;
FIG. 2 is a schematic diagram of a computing and communication architecture of a vehicle;
FIG. 3 is a schematic diagram of an embodiment of a vehicle control system according to an embodiment of this application;
FIG. 4 is an architectural diagram of a vehicle control system according to an embodiment of this application;
FIG. 5a is an architectural diagram of a component and an S-VIU according to an embodiment of this application;
FIG. 5b is another architectural diagram of a component and an S-VIU according to an embodiment of this application;
FIG. 5c is another architectural diagram of a component and an S-VIU according to an embodiment of this application;
FIG. 5d is another architectural diagram of a component and an S-VIU according to an embodiment of this application;
FIG. 5e is another architectural diagram of a component and an S-VIU according to an embodiment of this application;
FIG. 5f is another architectural diagram of a component and an S-VIU according to an embodiment of this application;
FIG. 5g is another architectural diagram of a component and an S-VIU according to an embodiment of this application;
FIG. 6a is an architectural diagram of an S-VIU and a VIU according to an embodiment of this application;
FIG. 6b is another architectural diagram of an S-VIU and a VIU according to an embodiment of this application;
FIG. 6c is another architectural diagram of an S-VIU and a VIU according to an embodiment of this application;
FIG. 6d is another architectural diagram of an S-VIU and a VIU according to an embodiment of this application;
FIG. 6e is another architectural diagram of an S-VIU and a VIU according to an embodiment of this application;
FIG. 6f is another architectural diagram of an S-VIU and a VIU according to an embodiment of this application;
FIG. 6g is another architectural diagram of an S-VIU and a VIU according to an embodiment of this application;
FIG. 7a is a schematic diagram of a connection manner of a component and a VIU according to an embodiment of this application;
FIG. 7b is another schematic diagram of a connection manner of a component and a VIU according to an embodiment of this application;
FIG. 7c is another schematic diagram of a connection manner of a component and a VIU according to an embodiment of this application;
FIG. 7d is another schematic diagram of a connection manner of a component and a VIU according to an embodiment of this application;
FIG. 7e is another schematic diagram of a connection manner of a component and a VIU according to an embodiment of this application;
FIG. 7f is another schematic diagram of a connection manner of a component and a VIU according to an embodiment of this application;
FIG. 8a is a diagram of a system architecture of a vehicle control system according to an embodiment of this application;
FIG. 8b is a diagram of another system architecture of a vehicle control system according to an embodiment of this application;
FIG. 8c is a diagram of another system architecture of a vehicle control system according to an embodiment of this application;
FIG. 9 is a schematic diagram of an embodiment of a vehicle control method according to an embodiment of this application; and
FIG. 10 is a schematic diagram of an embodiment of an S-VIU according to an embodiment of this application.

### DESCRIPTION OF EMBODIMENTS

Embodiments of this application provide a vehicle control system. A sub-vehicle integrated/integration unit is connected to a component and a vehicle integrated/integration unit, so that a cable harness length can be reduced, vehicle costs can be reduced, and diversified connection requirements of the component can be met.

For ease of understanding, the following briefly describes some technical terms in the embodiments of this application:
1. x domain controller/data center (xDC): The x domain controller/data center includes a mobile data center (MDC), also referred to as an intelligent driving platform, configured to control intelligent driving; a cockpit domain controller (CDC), also referred to as an intelligent cockpit platform, configured to control an intelligent cockpit; and a vehicle domain controller (VDC), also referred to as a vehicle control platform, configured to control vehicle power.
2. Vehicle integrated/integration unit (VIU, vehicle integrated/integration unit): The vehicle integrated/integration unit is also referred to as a vehicle integrated/integration unit or a complete vehicle integrated/integration unit. The VIU is upward connected to an xDC and downward connected to a component. The VIU can implement some or all electronic control unit functions of each of a plurality of components. In this application, the VIU is also referred to as a control unit.
3. Sub-vehicle integrated/integration unit (sub-vehicle integrated/integration unit, S-VIU): The sub-vehicle integrated/integration unit, sub-VIU for short, is also referred to as a satellite vehicle integrated/integration unit (Satellite vehicle integrated/integration unit, VIU), satellite VIU for short, or referred to as a sub-vehicle integrated/integration unit or a sub-complete vehicle integrated/integration unit. The S-VIU proposed in the embodiments of this application represents a sub-VIU or a satellite VIU, and the S-VIU is configured to upward connect to a VIU and downward connect to a component. In this application, the VIU is also referred to as a sub-control unit.
4. Component: The component includes a sensor or an actuator. In this application, the component is also referred to as a part.

The sensor includes a camera, a millimeter wave radar, a laser radar, an ultrasonic radar, a global navigation satellite system, an inertial navigation system, or the like.

The actuator includes a wiper, an electric glass lifter, a steering apparatus, a brake apparatus, or the like.

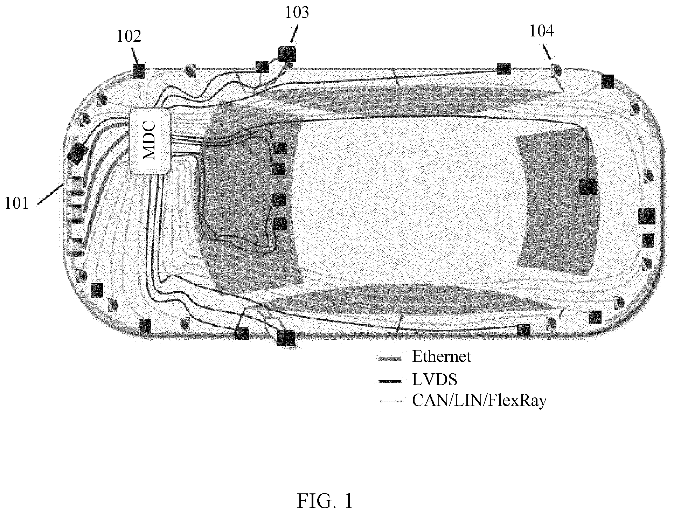

As shown in FIG. 1, a conventional electronic and electrical architecture (EEA) in the automotive industry is a bus and decentralized control architecture. With an increasing degree of vehicle electrification, a quantity of in-vehicle ECUs explodes. In the architecture shown in FIG. 1, ECUs in components such as a laser radar 101, a millimeter wave radar 102, a camera 103, and an ultrasonic radar 104 are all connected to an MDC by using cable harnesses, causing an excessively long total cable harness. An original EEA architecture is difficult to meet a vehicle intelligentization development requirement. Therefore, a computing and communication architecture (CCA) based on "computing + communication" is proposed. The CCA includes an MDC configured to control intelligent driving, a CDC configured to control an intelligent cockpit, and a VDC configured to control vehicle power. To implement data transmission between a component and a domain controller, a cable harness needs to be disposed between each sensor and the MDC, including a CAN, an LIN, FlexRay, Ethernet, LVDS, or the like. ECUs in vehicle components need to be all connected to an xDC by using cable harnesses. Currently, a cable harness system of a normal vehicle has about 1200 connection points and 600 cable harnesses, is about 1500 meters long, and weighs about 30 kilograms. In some vehicle types, a cable harness system of a vehicle has about 3000 connection points and 1500 cable harnesses, is about 5000 meters long, and weighs about 60 kilograms. It can be seen that a vehicle cable harness is long and heavy and has a complex topology structure, and therefore is difficult to arrange.

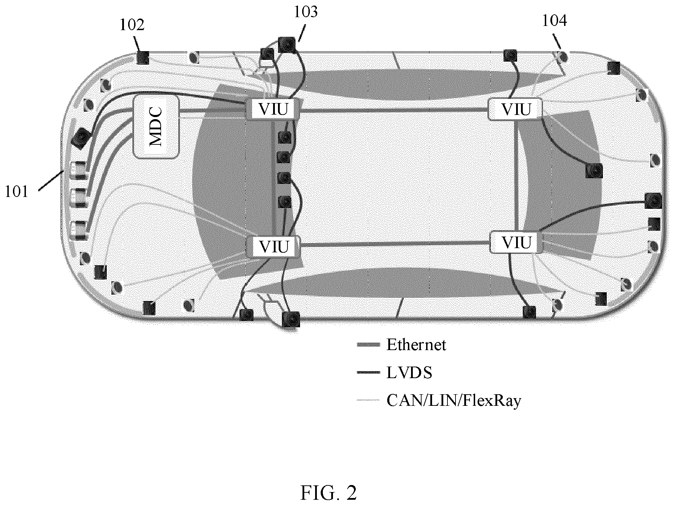

To reduce a cable harness length in a vehicle and improve system performance of the vehicle, a concept, an apparatus, and a function of a VIU are proposed. The VIU is upward connected to an xDC and downward connected to a component. Some or all electronic control unit functions are concentrated/upward transferred from the component to the VIU. FIG. 2 is a schematic diagram of a CCA. The VIU is introduced to the CCA, so that component production costs are reduced, and coordination between a plurality of components can be implemented, thereby improving system performance.

However, electronic control unit functions of a plurality of components are concentrated to the VIU, and therefore the VIU has a relatively high storage capability and computing capability, and correspondingly has relatively high device costs. With vehicle intelligentization development, components, including a sensor and an actuator, are various and numerous, and applicable to different communication network types. Therefore, relatively high requirements are proposed for an interface quantity and type of the VIU device, and consequently device costs are further increased. Therefore, a quantity of VIU devices disposed in a vehicle is limited, for example, 3 or 4. In addition, components are disposed in the vehicle in a relatively decentralized manner, and each component needs to be upward connected to a VIU. Due to the limited quantity and fixed locations of VIU devices, a cable harness between the component and the VIU is still relatively long. Furthermore, different components have different security or service latency requirements. If the components are connected to a same VIU without distinguishing, system complexity is high and performance is reduced.

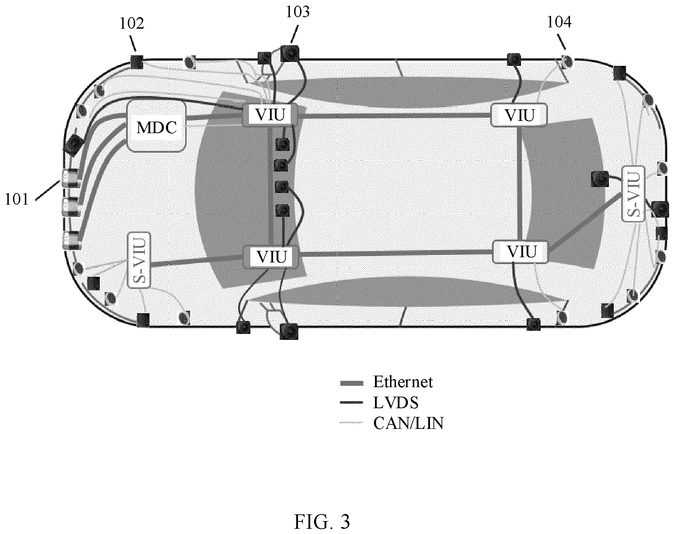

FIG. 3 shows a vehicle control system according to an embodiment of this application. An S-VIU is introduced to the vehicle control system and a topology structure of the S-VIU in a vehicle is properly arranged, so that an electronic and electrical architecture of the vehicle is improved to be a new computing and communication architecture. The vehicle control system can further improve CCA system performance, reduce a cable harness length, meet diversified connection requirements of a component, or the like. The vehicle control system provided in this application is very applicable to an intelligent connected vehicle with abundant functions and numerous sensors. The vehicle control system provided in this application may be applied to an electric vehicle or another non-fuel vehicle, or may be applied to a fuel vehicle. The following describes, by using specific embodiments, the S-VIU and the vehicle control system provided in the embodiments of this application.

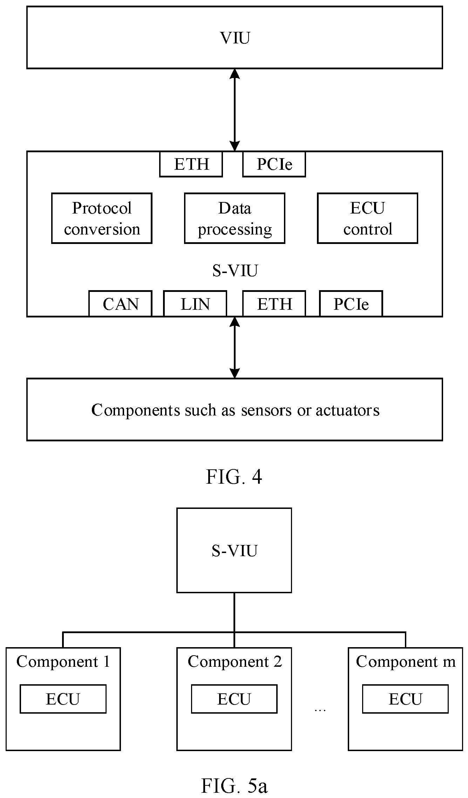

FIG. 4 is an architectural diagram of a vehicle control system according to an embodiment of this application.

The vehicle control system includes a VIU, an S-VIU, and a plurality of components. The S-VIU is connected to the plurality of components, and the S-VIU is configured to: obtain data sent by the components, and send first control information to the plurality of components. The S-VIU is connected to the VIU, and the VIU is configured to: obtain data sent by the S-VIU, and send second control information to the S-VIU. Neither a quantity of S-VIUs nor a quantity of VIUs in the vehicle control system is limited. It should be noted that the first control information may be control information generated by the S-VIU, or may be control information generated by the VIU and forwarded to the components by using the S-VIU. The second control information may be control information generated by the VIU, or may be forwarded control information generated by an xDC (not shown in FIG. 4). The second control information may be used to control the S-VIU, or may be used to control the components. This is not specifically limited herein. As shown in FIG. 4, connections between one S-VIU, also referred to as a first S-VIU, one VIU, also referred to as a first VIU, and the components are used as an example for description. The first S-VIU is downward connected to the components such as sensors or actuators, and upward connected to the first VIU.

The component is connected to the S-VIU by using a wired network and/or a wireless network. The S-VIU obtains data sent by the component, and sends control information to the component. The wired network may be one or more of a conventional bus, for example, a CAN, an LIN, or a FlexRay network, Ethernet, or PCIe. The wireless network may be one or more of Wi-Fi, Bluetooth, a cellular mobile network, or the like.

The S-VIU may also be connected to the VIU by using a wired network or a wireless network. Optionally, a communication protocol with a relatively high communication speed, such as Ethernet and/or PCIe, is usually used for data transmission between the S-VIU and the VIU. Optionally, although not shown in the figure, another type of network, such as a cellular mobile network, may be used. Neither a specific protocol type of data transmission between the component and the S-VIU nor a specific protocol type of data transmission between the S-VIU and the VIU is limited in this embodiment of this application. For example, the following Table 1 lists some possible implementations.

**Table 1 Communication protocols in a vehicle control system architecture**

| | Component and S-VIU | S-VIU and VIU |
|---|---|---|
| 1 | Conventional bus such as CAN/LIN/FlexRay | Ethernet |
| 2 | Conventional bus such as CAN/LIN/FlexRay | PCIe |
| 3 | Ethernet | Ethernet |
| 4 | PCIe | PCIe |
| 5 | PCIe | Ethernet |
| 6 | Ethernet | PCIe |

The S-VIU has a protocol conversion function. Usually, a low-speed transmission protocol such as a CAN, an LIN, or FlexRay is used for data transmission between the component and the S-VIU, and a high-speed transmission protocol such as Ethernet or PCIe is used for data transmission between the S-VIU and the VIU. The S-VIU implements conversion between the two types of protocols.

Optionally, the S-VIU may further perform processing such as computing on data collected from a sensor, and send a processing result to the VIU.

Optionally, the S-VIU has an ECU control function, and the S-VIU can control the component. The control function may be obtained by downward delivering control permission of the VIU, or may be obtained by upward transferring some or all electronic control unit functions of the component. Currently, the electronic control unit function of the component includes a software computing part and a logic control part.

Optionally, the S-VIU further has a gateway function, and the gateway function is specifically a signal routing function. For example, the following describes a plurality of possible cases in which the S-VIU has the ECU control function. Example 1: The S-VIU does not include an ECU function.

As shown in FIG. 5a, the S-VIU is connected to m components, m is a total quantity of components connected to the S-VIU, and a value of m is a positive integer. The ECU function is retained in the component, and the S-VIU does not include the ECU function. In this scenario, the S-VIU may be disposed based on a physical location of the component, and a vehicle control system including the S-VIU can save a cable harness.

Example 2: The S-VIU has an ECU function.

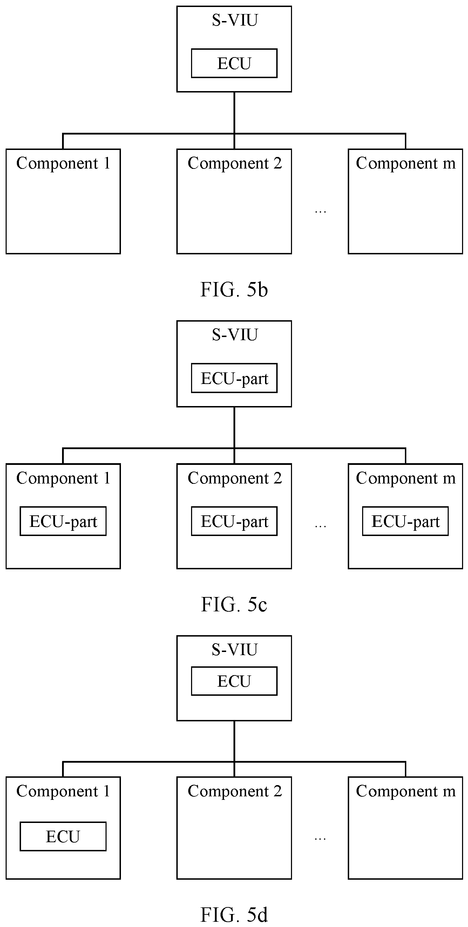

The S-VIU is connected to m components, and some or all ECU functions of each component are upward transferred to the S-VIU. All the components may be in a same ECU function upward-transferring case or different ECU function upward-transferring cases. There are a plurality of specific cases. Refer to FIG. 5b to FIG. 5g.

As shown in FIG. 5b, ECU functions of all the m components are all upward transferred to the S-VIU.

As shown in FIG. 5c, some ECU functions of each of the m components are upward transferred to the S-VIU, and some ECU functions of each of the m components are retained in the component.

As shown in FIG. 5d, in the m components, ECU functions of some components, such as a component 1, are retained in the components or upward transferred to a VIU (not shown in the figure), and ECU functions of the other components, such as a component 2, are all upward transferred to the S-VIU.

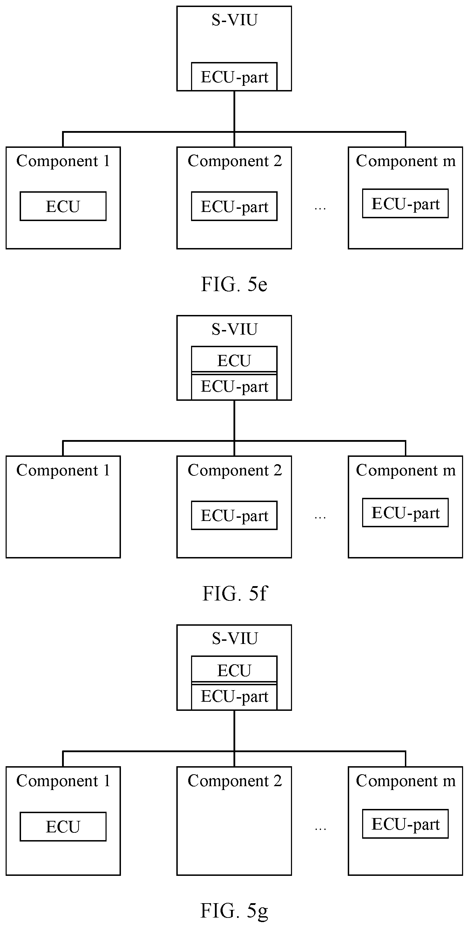

As shown in FIG. 5e, some ECU functions of some of the m components, such as a component 2, is upward transferred to the S-VIU, and ECU functions of the other components, such as a component 1, are retained in the components or a VIU.

As shown in FIG. 5f, in the m components, ECU functions of some components, such as a component 1, are all upward transferred to the S-VIU, and some ECU functions of each of the other components, such as a component 2, are upward transferred to the S-VIU.

As shown in FIG. 5g, in the m components, ECU functions of some components, such as a component 1, are retained in the components or upward transferred to a VIU (not shown), ECU functions of some components, such as a component 2, are upward transferred to the S-VIU, and some ECU functions of each of the other components, such as a component m, are retained in the component.

A specific function of the S-VIU may be determined based on an actual application requirement, and is not limited in this embodiment of this application.

The foregoing example 2 describes various specific cases in which any S-VIU in a vehicle control system has an ECU function. Usually, the vehicle control system includes a plurality of S-VIUs, the S-VIU is upward connected to a VIU, and the vehicle control system includes at least two VIUs. Optionally, there are three, four, five, or six VIUs. A plurality of VIUs may be connected in a ring or another form. In this embodiment of this application, neither a quantity of VIUs nor a VIU connection manner is limited, and the plurality of VIUs in the vehicle control system may be considered as a whole.

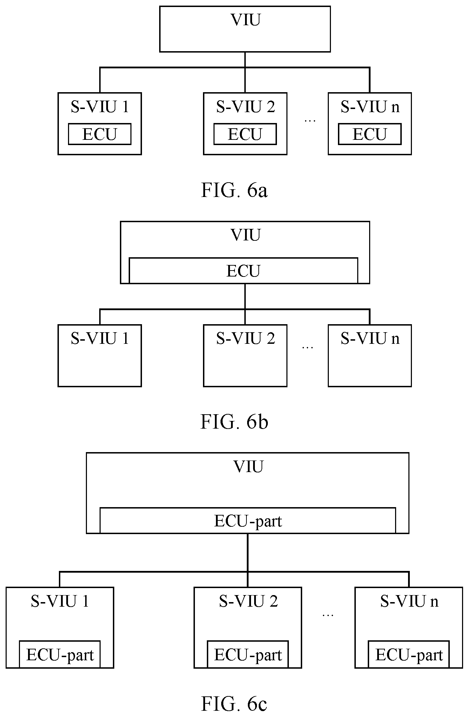

ECU functions of the plurality of S-VIUs in the vehicle control system may be further upward transferred to the VIU or an xDC. The following uses the VIU as an example to describe a plurality of possible ECU function distribution cases in the S-VIU and the VIU in the vehicle control system provided in this embodiment of this application. Refer to FIG. 6a to FIG. 6g. The vehicle control system includes n S-VIUs.

As shown in FIG. 6a, the VIU does not have an ECU function, and each of the n S-VIUs retains an ECU function upward transferred by a component. n is a total quantity of S-VIUs in the vehicle control system, a value of n is a positive integer, and the VIU may be configured to send control information to the S-VIU.

As shown in FIG. 6b, ECU functions are all upward transferred to the VIU, and none of the n S-VIUs has an ECU function.

As shown in FIG. 6c, ECU functions are partially upward transferred to the S-VIUs, and partially upward transferred to the VIU, and the n S-VIUs each have some ECU functions.

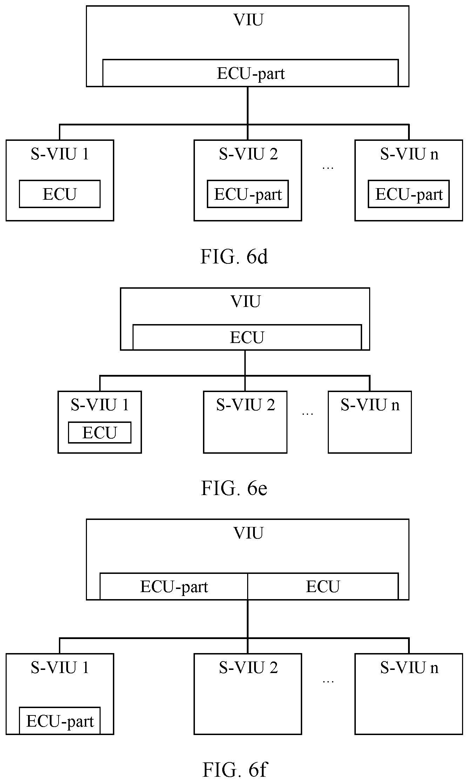

As shown in FIG. 6d, in the n S-VIUs, some of the n S-VIUs, such as an S-VIU 1, retain all ECU functions, and some of the n S-VIUs, such as an S-VIU 2, retain some ECU functions.

As shown in FIG. 6e, in the n S-VIUs, some of the n S-VIUs, such as an S-VIU 1, retain all ECU functions, and some of the n S-VIUs, such as an S-VIU 2, do not retain an ECU function.

As shown in FIG. 6f, in the n S-VIUs, some of the n S-VIUs, such as an S-VIU 1, retain some ECU functions, and some of the n S-VIUs do not retain an ECU function.

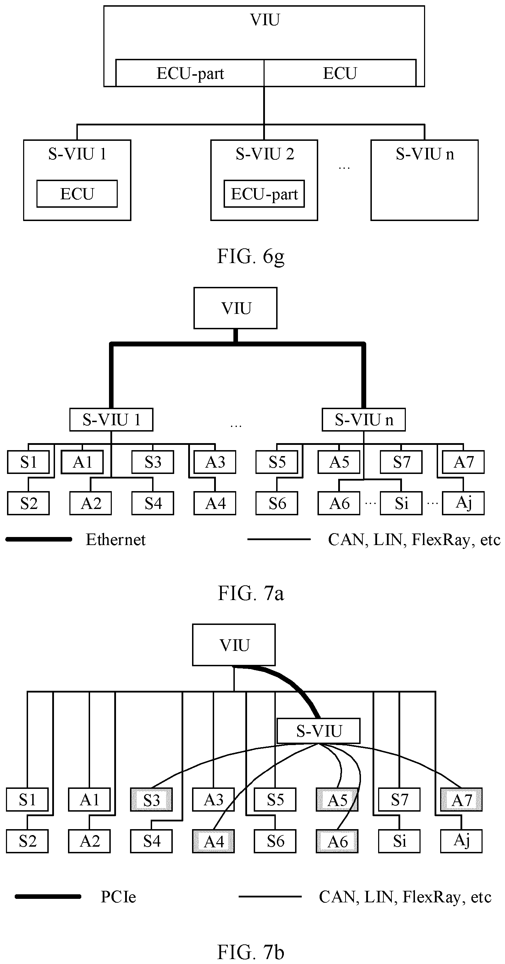

As shown in FIG. 6g, in the n S-VIUs, some of the n S-VIUs, such as an S-VIU 1, retain all ECU functions, some of the n S-VIUs, such as an S-VIU 2, retain some ECU functions, and some of the n S-VIUs, such as an S-VIU n, do not retain an ECU function.

Usually, the vehicle control system includes a plurality of S-VIUs, each S-VIU is connected to components that meet a preset condition, the components connected to each S-VIU constitute a component set, and the component set includes one or more components. In different scenarios, based on an actual use requirement, a preset condition that needs to be met for connecting to a same S-VIU in a vehicle may be flexibly determined, that is, components may be grouped as a component set based on the preset condition. The following specifically describes different methods for determining a component set.
1. Based on a physical location of a component.

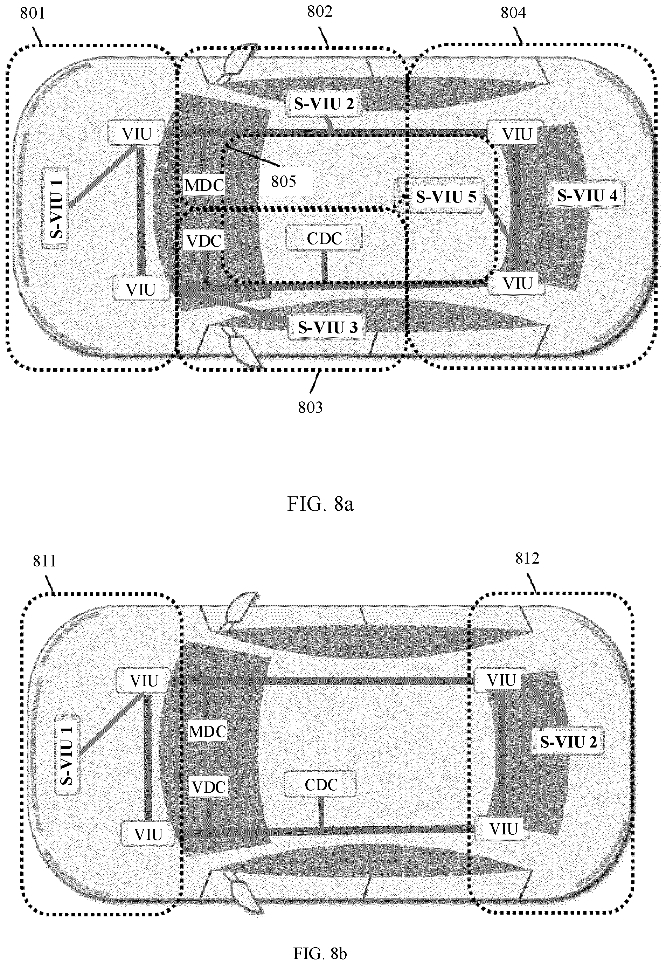

A first preset condition includes: a component is disposed in a preset location area. Optionally, a first S-VIU is also located in the preset location area. Space in which the vehicle is located is classified into a plurality of non-overlapping physical location areas, one S-VIU is disposed in each area, and the S-VIU in the area is connected to a component in the area. In some embodiments, refer to preset location area classification methods in FIG. 8a to FIG. 8c. Optionally, components that belong to a first physical location area have a same first physical location identifier. If the first preset condition is that a physical location identifier of a component is a first preset value, a component whose physical location identifier is the first preset value is connected to the first S-VIU.

Optionally, a distance between the component and the first S-VIU is less than or equal to a first threshold. The distance between the component and the S-VIU is a physical distance between the component and the S-VIU. A specific value of the first threshold is not limited. For example, the first threshold is 0.35 m, 0.5 m, 0.8 m, or 1.0 m. Optionally, a physical location of the component in a vehicle coordinate system may be associated based on an identifier of the component, a physical location of the S-VIU in the vehicle coordinate system may be associated based on an identifier of the S-VIU, and the distance between the component and the S-VIU may be obtained based on the physical location of the component and the physical location of the S-VIU, to determine whether the distance between the component and the S-VIU is less than or equal to the first threshold. In the vehicle control system in this embodiment of this application, a connection relationship between a component and an S-VIU is determined based on a physical location of the component in the vehicle, a distance between a component in a first component set and the first S-VIU is less than or equal to a preset threshold, and the component in the first component set is connected to the first S-VIU, and then connected to a VIU by using the first S-VIU.

Optionally, if a component meets connection conditions of a plurality of S-VIUs, it may be determined, based on physical locations of the component and the plurality of S-VIUs, to connect the component to an S-VIU closest to the component. FIG. 7a is a schematic diagram of a connection manner of a component and a VIU according to an embodiment of this application. A vehicle control system includes n S-VIUs, and each S-VIU is downward connected to a plurality of components and upward connected to a VIU. It should be noted that, because a plurality of VIUs in the vehicle control system may be considered as a whole, the VIU shown in FIG. 7a does not constitute a limitation on a quantity of VIUs in the vehicle control system.

For example, a first component set connected to an S-VIU 1 specifically includes a plurality of sensors: S1, S2, S3, and S4, and a plurality of actuators: A1, A2, A3, and A4. A physical distance between each of the components S1, S2, S3, S4, A1, A2, A3, and A4 in the first component set and the S-VIU 1 is less than or equal to a preset threshold, that is, a physical location of each of the components is relatively close to a physical location of the S-VIU 1 in a vehicle. Due to a relatively small quantity and fixed locations of VIUs, the VIU is usually not disposed adjacent to a component, so that the vehicle control system provided in this embodiment of this application can reduce a cable harness length required for directly connecting the component to the VIU. Similarly, a plurality of components located in a same location area are connected to an S-VIU n disposed adjacent to the components, the component set includes sensors S5, S6, S7, ..., and Si, and actuators A5, A6, A7, ..., and Aj, and neither a quantity of sensors nor a quantity of actuators in the component set is limited. In this embodiment, the component is connected to the S-VIU by using a network constructed according to a protocol such as a CAN, an LIN, or FlexRay, and the S-VIU is connected to the VIU by using a network constructed according to an Ethernet protocol.

A plurality of components in a component set may have a same function or may have different functions. This is not specifically limited herein. For example, a component set connected to a same S-VIU may have both a sensor of an ADAS and an actuator of a power system function.

Based on an actual requirement of an intelligent vehicle, there may be one or more S-VIUs. This is not specifically limited herein. For example, considering that there are a relatively large quantity of sensors for observation and ranging in a vehicle head part and a vehicle tail part, such as a monocular camera, a binocular camera, and a millimeter wave radar, one S-VIU may be disposed in each of the vehicle head part and the vehicle tail part.

In the vehicle control system provided in this embodiment of this application, components located in a same physical location area are connected to a same S-VIU, and then connected to a VIU by using the S-VIU, and a physical location of the S-VIU is closer to a physical location of the component than a physical location of the VIU. Therefore, a cable harness can be saved in comparison with a case in which the component is directly connected to the VIU.

2. Based on a function of a component.

A first preset condition includes: a function executed by a component is a preset function. The preset function may be, for example, one or more of a thermal management function, a seat management function, a door and window management function, or an audio-visual entertainment function. In a vehicle control system in this embodiment of this application, components with a same function belong to one component set, and components in different component sets have different functions.

Components that implement a same function in a vehicle are first connected to a same S-VIU, and then connected to a VIU by using the S-VIU. As shown in FIG. 7b, for example, the first preset condition includes: the function executed by the component is the thermal management function. In this case, component S3, A4, A5, A6, and A7 with the thermal management function are connected to a first S-VIU responsible for the thermal management function. Optionally, ECU functions of the components with the thermal management function are all upward transferred to the first S-VIU. Therefore, data of all the heat management components is concentrated to the first S-VIU. This facilitates coordination between the components, so that the data can be quickly processed, thereby improving system performance. Optionally, in this embodiment, the component is connected to the S-VIU by using a network constructed according to a protocol such as a CAN, an LIN, or FlexRay, and the S-VIU is connected to the VIU by using a network constructed according to a PCIe protocol. Optionally, components other than those in a first component set each may be connected to the VIU by using a network constructed according to a protocol such as a CAN, an LIN, or FlexRay.

3. Based on a manufacturer of a component.

A first preset condition includes: a manufacturer identifier of a component is a second preset value. In a vehicle control system in this embodiment of this application, components with a same manufacturer identifier belong to a same component set and are connected to a same S-VIU.

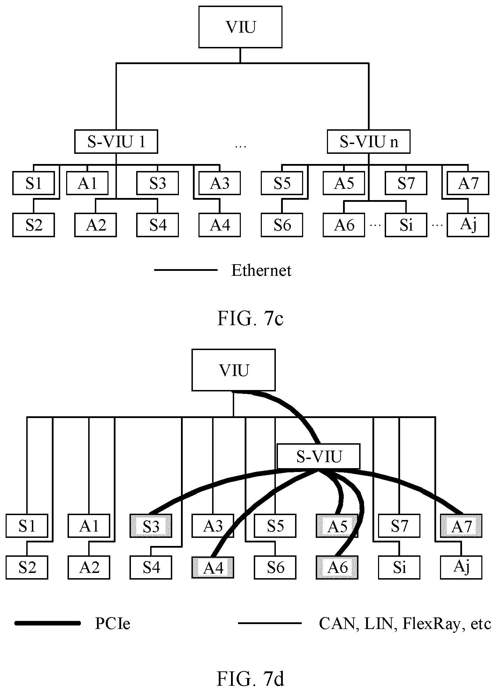

In an existing solution, a component produced by a manufacturer includes a matching ECU. In this embodiment, components connected under a same S-VIU come from a same manufacturer. As shown in FIG. 7c, for example, a plurality of components in a first component set connected to an S-VIU 1, including a plurality of sensors: S1, S2, S3, and S4, and a plurality of actuators: A1, A2, A3, and A4, are components produced by a first manufacturer. Optionally, all or some ECU functions of each of the components are upward transferred to the S-VIU 1. The first manufacturer may integrate S1, S2, S3, S4, A1, A2, A3, A4, and the S-VIU 1 into one product unit by integrating ECU functions of the plurality of components, so that production efficiency of the component manufacturer can be improved and production costs can be reduced. Optionally, in this embodiment, the component, the S-VIU, and a VIU are all connected to each other by using a network constructed according to an Ethernet protocol. It should be noted that a communication rate of the component and the S-VIU may be the same as or different from a communication rate of the S-VIU and the VIU.

4. Based on a security level of data of a component.

A first preset condition includes: a security level of data of a component is a first preset level. In a vehicle control system in this embodiment of this application, based on security levels of data of components, components at a same security level are classified under a same component set and connected to a same S-VIU.

Data of components connected under one S-VIU belongs to a same security level. The data of the component includes data obtained by a sensor, control information received by an actuator, or the like. There are a plurality of security level classification manners. Optionally, a security level obtained through classification based on a vehicle safety integrity level (automotive safety integration level, ASIL) includes an ASIL A, an ASIL B, an ASIL C, or an ASIL D. The ASIL A is a lowest level, and the ASIL D is a highest level. The first preset level may be the ASIL A, the ASIL B, the ASIL C, or the ASIL D. This is not specifically limited herein.

In an existing solution, a quantity of VIUs may be less than a quantity of security levels. In this case, components cannot be classified and connected based on different security levels. For example, as shown in FIG. 7d, components S3, A4, A5, A6, and A7 that correspond to a service with a relatively high security requirement are all connected to a same S-VIU, and data obtained by the S-VIU is backed up, so that system security can be improved. Optionally, S3, A4, A5, A6, and A7 are connected to the S-VIU by using a network constructed according to a PCIe protocol, and the S-VIU is also connected to a VIU by using a network constructed according to the PCIe protocol. It should be noted that, although the connections are performed by using a same type of communication network, a communication rate of the component and the S-VIU may be the same as or different from a communication rate of the S-VIU and the VIU. Usually, the communication rate of the S-VIU and the VIU is higher.

In the vehicle control system provided in this embodiment of this application, the S-VIU is connected to components of a same security level, so that system management can be facilitated, and system security can be improved.

5. Based on a service level of data of a component.

A first preset condition includes: a service level of data of a component is a second preset level. A service level of data of each component may be associated with an identifier of the component. In a vehicle control system in this embodiment of this application, based on service levels of data of components, components corresponding to a same service level are classified under a same component set and connected to a same S-VIU.

A connected S-VIU is determined based on a service level corresponding to data of a component, and components connected under a same S-VIU belong to a same service level. The service level includes a level based on a latency requirement, a level based on a reliability requirement, or the like. This is not specifically limited herein. Based on latency requirements, services corresponding to components may be classified into a service with a high latency requirement, namely, a low latency service, a service with a medium latency requirement, and a service with a low latency requirement. The second preset level is not limited herein. Based on reliability requirements, services corresponding to components may be classified into a service with a high reliability requirement, a service with a medium reliability requirement, and a service with a low reliability requirement. The second preset level is not limited herein. It should be noted that the second preset level and the first preset level are not related to each other, and are only used to distinguish between a preset condition of a security level of a component and a preset condition of a service level of data of a component.

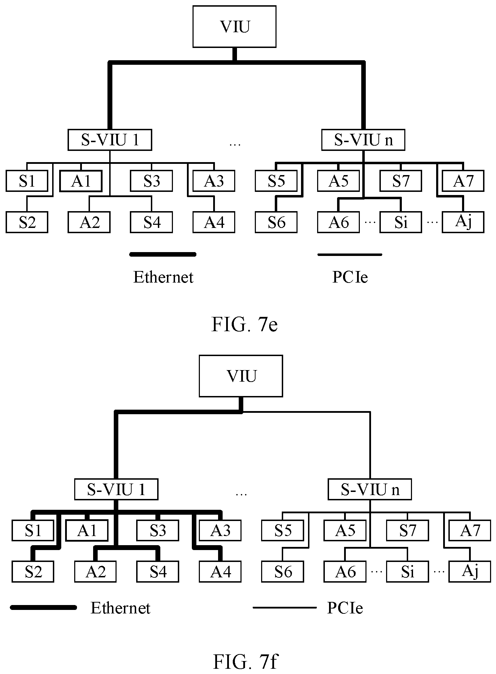

Optionally, as shown in FIG. 7e, a first component set corresponding to a service with a low reliability requirement is connected to an S-VIU 1, and components corresponding to a service with a high reliability requirement are connected to an S-VIU n. Optionally, the connected S-VIU may perform redundant backup on data, to improve security. Optionally, in this embodiment, the component is connected to the S-VIU by using a network constructed according to a PCIe protocol, and the S-VIU is connected to a VIU by using a network constructed according to an Ethernet protocol.

In the vehicle control system provided in this embodiment of this application, the S-VIU is connected to components of a same service level, so that system management can be facilitated. For example, an S-VIU that processes a service with a high latency requirement may be connected to the VIU in a high-speed data transmission manner, and an S-VIU that processes a high reliability service can perform backup to improve security.

6. Based on a data interface type or a transmission protocol type.

A first preset condition includes: a data transmission protocol type of a component is a second preset type. In a vehicle control system provided in this embodiment of this application, a component set is determined based on a data interface type or a transmission protocol type. Components connected to an S-VIU by using a same type of data interface are classified under one component set, or components that transmit data by using a same transmission protocol are classified under one component set, and all components in one component set are connected to a same S-VIU. Components connected to a same S-VIU are all connected to the S-VIU by using a same transmission protocol or a same type of data interface. A data interface type or a transmission protocol type of each component may be associated with an identifier of the component. It should be noted that the second preset type and a first preset type are not related to each other, and are only used to distinguish between a preset condition of a data interface type of a component and a preset condition of a data transmission protocol type of a component.

The data interface type includes a serial port, a local area network (LAN) interface, a USB interface, a wireless interface, or the like.

The transmission protocol type includes a wired network transmission protocol such as a CAN, an LIN, FlexRay, Ethernet, or PCIe, and a wireless network transmission protocol: a wireless local area network (such as wireless fidelity (wireless fidelity, Wi-Fi) or Bluetooth), or a cellular network (such as 3G, 4G, or 5G).

As shown in FIG. 7f, an S-VIU 1 is connected to a first component set by using a network constructed according to an Ethernet protocol, and an S-VIU n is connected to an n^{th} component set by using a network constructed according to a PCIe protocol. Optionally, in this embodiment, components in the first component set are connected to the S-VIU 1 by using the network constructed according to the Ethernet protocol, and the S-VIU 1 is connected to a VIU by using a network constructed according to the Ethernet protocol; and components in a second component set are connected to an S-VIU 2 by using a network constructed according to a PCIe protocol, and the S-VIU 2 is connected to the VIU by using a network constructed according to the PCIe protocol.

Due to a relatively large quantity of vehicle components, components transmit data by using different data interface types, or transmit data by using different transmission protocol types. In the vehicle control system provided in this embodiment of this application, the component set is determined based on the data interface type or the transmission protocol type, so that a quantity of interface types of the S-VIU can be reduced, thereby reducing costs. 7. Combination of a plurality of manners.

In a vehicle control system provided in this embodiment of this application, the first preset condition includes one or more of the following: a physical location identifier of a component is a first preset value; a function executed by the component is a preset function; a data interface type of the component is a first preset type; a data transmission protocol type of the component is a second preset type; a security level of data of the component is a first preset level; a service level of the data of the component is a second preset level; and a manufacturer identifier of the component is a second preset value. That is, a component set classification manner may be determined based on a combination of two or more of the following factors: a function executed by a component, a physical location identifier of the component, a data interface type of the component, a data transmission protocol type of the component, a security level of data of the component, a service level of the data of the component, a manufacturer identifier of the component, and the like. For example, components connected to a first S-VIU all have a same manufacturer and data interface type. Optionally, if the vehicle control system includes a first S-VIU and a second S-VIU, the first S-VIU is connected to a first component that meets a first preset condition, the second S-VIU is connected to a second component that meets a second preset condition, and the first preset condition is different from the second preset condition herein. This is specifically described below.

Example 1: The first preset condition is that a distance between a component and the first S-VIU is less than or equal to 0.5 m, and the second preset condition is that a distance between a component and the second S-VIU is less than or equal to 0.5 m.

Example 2: The first preset condition is that a physical location identifier of a component is a first preset value, a physical location indicated by the first preset value is a first area in a vehicle, and a function executed by the component is a seat management function; and the second preset condition is that a physical location identifier of a component is a first preset value, a physical location indicated by the first preset value is a first area in the vehicle, and a function executed by the component is a door and window management function.

It may be understood that the vehicle control system may include more than two S-VIUs, and components connected to the S-VIUs need to meet different preset conditions. Details are not described herein.

FIG. 8a to FIG. 8c are diagrams of system architectures of several vehicle control systems according to embodiments of this application. Because computing and communication functions of the system architecture are significantly enhanced, the system architecture is also referred to as a computing and communication architecture (CCA). The CCA architecture includes the following three parts:
(1) three vehicle-level platforms: an MDC, namely, an intelligent driving platform, a CDC, namely, an intelligent cockpit platform, and a VDC, namely, an intelligent electric platform;
(2) four VIUs, responsible for functions such as data processing and transmission; and
(3) a plurality of S-VIUs.

A quantity of S-VIUs and a component connection manner in the vehicle control system may be set based on an actual requirement. This is not specifically limited herein. The following provides descriptions by using examples.

Example 1: As shown in FIG. 8a, the plurality of S-VIUs in the vehicle control system include an S-VIU 1 to an S-VIU 5. The S-VIU 1 is a vehicle head S-VIU, and is connected to a component disposed in a vehicle head area 801. The S-VIU 2 is a central-right S-VIU, is responsible for controlling right door and right seat areas, and is connected to a component disposed in a central-right area 802. The S-VIU 3 is a central-left S-VIU, is responsible for controlling left door and left seat areas, and is connected to a component disposed in a central-right area 803. The S-VIU 4 is a vehicle tail S-VIU, is responsible for controlling a vehicle tail area, and is connected to a component disposed in a vehicle tail area 804. The S-VIU 5 is a top S-VIU, and is connected to a component disposed in a vehicle top area 805. It should be noted that, because FIG. 8a is a two-dimensional image, the area 805 shown in FIG. 8a partially overlaps the areas 802 to 804. In three-dimensional space, the area 805 is the vehicle top area and do not overlap the areas 802 to 804. Components are disposed in different location areas in a vehicle, and a specific size of each location area is related to both an actual size of the vehicle and a location of a component. A specific value is not limited herein. For example, in a vehicle whose length * width * height is 4.85 m * 1.85 m * 1.75 m, a width of the area 801 in a vehicle length extension direction may be 1 m, that is, in a size of the area 801 in FIG. 8a, length * width is 1 m * 1.85 m, and a height is consistent with a height size of a vehicle head.

Example 2: Referring to FIG. 8b, the plurality of S-VIUs in the vehicle control system include an S-VIU 1 and an S-VIU 2. The S-VIU 1 is a vehicle head S-VIU, and is connected to a component disposed in a vehicle head area 811. The S-VIU 2 is a vehicle tail S-VIU, and is connected to a component disposed in a vehicle tail area 812.

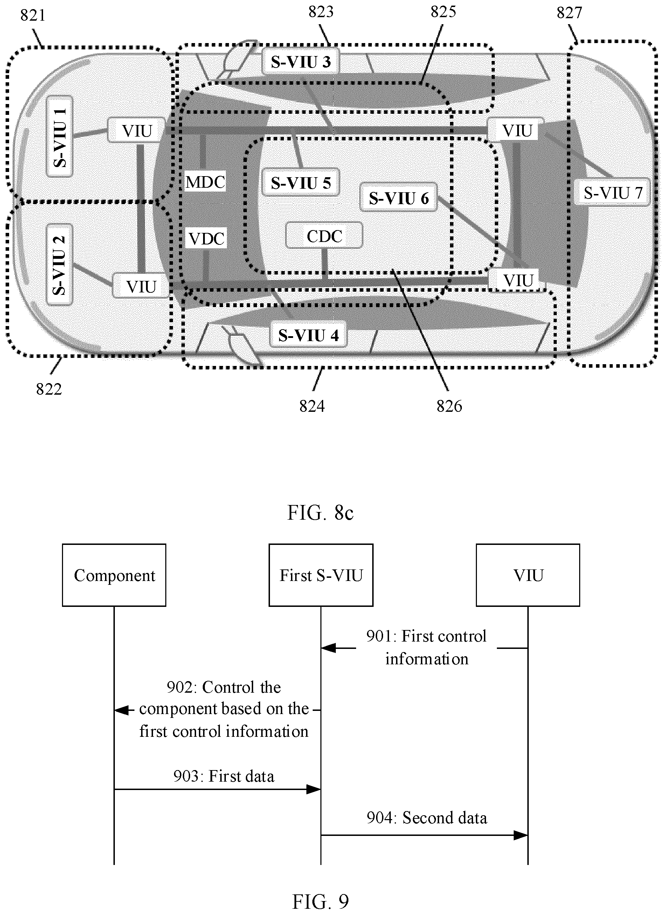

Example 3: As shown in FIG. 8c, the vehicle control system includes an S-VIU 1 to an S-VIU 7. The S-VIU 1 is a right vehicle head S-VIU, and is connected to a component disposed in a right vehicle head area 821. The S-VIU 2 is a left vehicle head S-VIU, and is connected to a component disposed in a left vehicle head area 822. The S-VIU 3 is a right door S-VIU, is responsible for controlling a right door area, and is connected to a component disposed in a right door area 823. The S-VIU 4 is a left door S-VIU, and is connected to a component disposed in a left door area 824. The S-VIU 5 is a central area S-VIU, and is connected to a component disposed in a seat area 825. The S-VIU 6 is a top S-VIU, and is connected to a component disposed in a vehicle top area 826. The S-VIU 7 is a vehicle tail S-VIU, and is connected to a component disposed in a vehicle tail area 827. Similarly, because FIG. 8c is a two-dimensional image, the area 825 shown in FIG. 8c partially overlaps the right door area 823, the left door area 824, and the top area 826, and does not overlap the right door area 823, the left door area 824, and the top area 826 in an actual three-dimensional space scenario. Components are disposed in different location areas in a vehicle, and a specific size of each location area is related to both an actual size of the vehicle and a location of a component. A specific value is not limited herein.

FIG. 9 is a schematic diagram of an embodiment of a vehicle control method according to an embodiment of this application.

The vehicle control method includes the following steps.

901: A first S-VIU receives first control information sent by a first VIU.

The first S-VIU receives the first control information sent by the first VIU, and the first control information may be used to control the first S-VIU or a component. This is not specifically limited herein.

Optionally, the first control information is generated by the first VIU.

Optionally, the vehicle includes at least one of a mobile data center, a cockpit domain controller, and a vehicle domain controller, and the first VIU is connected to the at least one of the mobile data center, the cockpit domain controller, or the vehicle domain controller. The first control information is first control information sent by the at least one of the mobile data center, the cockpit domain controller, or the vehicle domain controller to the first VIU, and the first VIU receives the first control information and forwards the first control information to the first S-VIU.

902: The first S-VIU controls the component based on the first control information.

Optionally, the method further includes:
the first S-VIU is configured to implement all or some electronic control unit functions of the component.

903: The first S-VIU receives first data sent by the first component.

The component sends the first data to the first S-VIU. The first data may be, for example, data collected by a sensor.

904: The first S-VIU sends the first data to the first VIU.

Optionally, the first S-VIU directly forwards the first data to the first VIU.

Optionally, after the first S-VIU obtains the first data sent by the component, the first S-VIU processes the first data, where the processing includes one or more of the following operations: performing data processing on the first data, encapsulating the first data according to a transmission protocol, performing protocol conversion on the first data, and performing data format conversion on the first data; and the first S-VIU sends processed first data to the first VIU.

It should be noted that step 903 and step 904 are optional steps and may be performed or not performed. This is not limited herein.

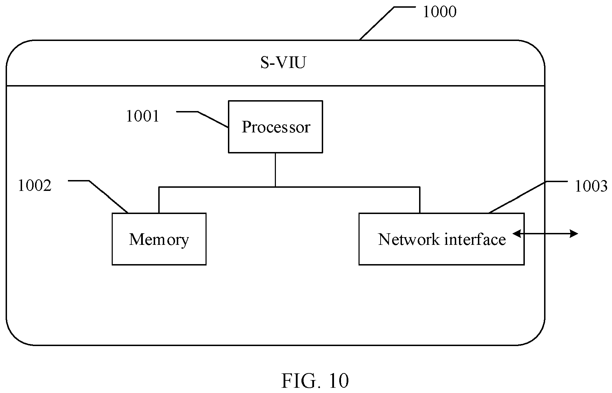

Referring to FIG. 10, the following describes an embodiment of an S-VIU in a vehicle control system according to an embodiment of this application.

A specific device form of the S-VIU is not limited in this embodiment of this application.

The S-VIU may vary greatly with configuration or performance, and may include one or more processors 1001 and memories 1002. The memory 1002 stores a program and/or data.

The memory 1002 may be a volatile storage or a nonvolatile storage. Optionally, the processor 1001 is one or more central processing units (central processing unit, CPU), and the CPU may be a single-core CPU, or may be a multicore CPU. The processor 1001 may communicate with the memory 1002, and execute a series of instructions in the memory 1002 in the S-VIU 1000.

The S-VIU 1000 further includes one or more network interfaces 1003. A type of the network interface is not limited. For example, the network interface is a CAN, an LIN, a FlexRay network, Ethernet, or PCIe. The S-VIU 1000 may further include a wireless network interface, such as Wi-Fi, Bluetooth, or a cellular mobile network. The S-VIU 1000 may include one or more types of network interfaces, and each type may include one or more network interfaces. A specific interface type and interface quantity are not limited herein.

Usually, a computing capability of the processor 1001 in the S-VIU is less than a computing capability of a VIU, and a storage capability of the memory 1002 is less than a storage capability of the VIU.

Optionally, although not shown in FIG. 10, the S-VIU 1000 may further include one or more power supplies and one or more input/output interfaces. The input/output interface may be configured to connect to a display, a touchscreen device, a sensor device, or the like. The input/output interface is an optional component, and may or may not exist. This is not limited herein.

In the several embodiments provided in this application, it should be understood that the disclosed system, apparatus, and method may be implemented in other manners. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, that is, may be located in one place, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A vehicle control system, comprising:
a control unit; and
a first sub-control unit, wherein
the first sub-control unit is connected to a first component that meets a first preset condition, and the first sub-control unit is configured to: obtain first data sent by the first component, and send first control information to the first component, wherein the first component comprises a sensor or an actuator; and
the first sub-control unit is connected to the control unit, and the first sub-control unit is configured to: send second data to the control unit, and obtain second control information sent from the control unit.

2. The system according to claim 1, wherein the first preset condition comprises one or more of the following:
a component is disposed in a preset location area;
a function executed by the component is a preset function;
a data interface type of the component is a first preset type;
a data transmission protocol type of the component is a second preset type;
a security level of data of the component is a first preset level;
a service level of the data of the component is a second preset level; and
a manufacturer identifier of the component is a second preset value.

3. The system according to claim 1 or 2, wherein
the first sub-control unit is connected to the first component by using a wired network or a wireless network;
the wired network is a network constructed according to one or a combination of a plurality of a controller area network protocol, a local interconnect network protocol, a FlexRay network protocol, an Ethernet protocol, or a peripheral component interconnect express protocol; and
the wireless network is a network constructed according to one or a combination of a plurality of a wireless fidelity protocol, a Bluetooth protocol, or a cellular mobile network protocol.

4. The system according to any one of claims 1 to 3, wherein that the first sub-control unit is connected to the control unit comprises:
the first sub-control unit is connected to the control unit by using a network constructed according to one or a combination of a plurality of the Ethernet protocol or the peripheral component interconnect express protocol.

5. The system according to any one of claims 1 to 4, wherein the vehicle control system further comprises:
a second sub-control unit, wherein the second sub-control unit is connected to a second component that meets a second preset condition, the second preset condition is different from the first preset condition, and the second sub-control unit is configured to: obtain third data sent by the second component, and send third control information to the second component; and
the second sub-control unit is connected to the control unit, and the second sub-control unit is configured to: send fourth data to the control unit, and obtain fourth control information sent from the control unit.

6. The system according to any one of claims 1 to 5, wherein
the first sub-control unit is configured to implement all or some electronic control unit functions of the first component.

7. The system according to any one of claims 1 to 6, wherein
the first sub-control unit is further configured to convert the first data transmitted according to a first transmission protocol into the second data transmitted according to a second transmission protocol, wherein the first transmission protocol comprises the controller area network protocol, the local interconnect network protocol, the FlexRay network protocol, the Ethernet protocol, the peripheral component interconnect express protocol, the wireless fidelity protocol, the Bluetooth protocol, or the cellular mobile network protocol, the second transmission protocol comprises the Ethernet protocol or the peripheral component interconnect express protocol, and the first transmission protocol is different from the second transmission protocol.

8. The system according to any one of claims 1 to 7, wherein the vehicle control system further comprises at least one of a mobile data center, a cockpit domain controller, and a vehicle domain controller; and
the control unit is connected to the at least one of the mobile data center, the cockpit domain controller, or the vehicle domain controller.

9. A vehicle control method, wherein the vehicle comprises a control unit, a first sub-control unit, and a first component, and the method comprises:
receiving, by the first sub-control unit, first control information sent by the control unit; and
controlling, by the first sub-control unit, the first component based on the control information.

10. The method according to claim 9, wherein the method further comprises:
obtaining, by the first sub-control unit, first data sent by the first component; and
sending, by the first sub-control unit, the first data to the control unit.

11. The method according to claim 9, wherein the method further comprises:
obtaining, by the first sub-control unit, second data sent by the first component;
processing, by the first sub-control unit, the second data to obtain third data, wherein the processing comprises one or more of the following operations: performing data processing on the second data, encapsulating the second data according to a transmission protocol, performing protocol conversion on the second data, and performing data format conversion on the second data; and
sending, by the first sub-control unit, the third data to the control unit.

12. The method according to any one of claims 9 to 11, wherein the first sub-control unit is configured to implement all or some electronic control unit functions of the first component.

13. The method according to any one of claims 9 to 12, wherein the vehicle comprises at least one of a mobile data center, a cockpit domain controller, and a vehicle domain controller, and the control unit is connected to the at least one of the mobile data center, the cockpit domain controller, or the vehicle domain controller; and
the first control information is control information sent by the at least one of the mobile data center, the cockpit domain controller, or the vehicle domain controller to the control unit.

14. A vehicle control method, wherein the vehicle comprises a control unit, a first sub-control unit, and a first component, and the method comprises:
obtaining, by the first sub-control unit, first data sent by the first component; and
sending, by the first sub-control unit, second data to the control unit based on the first data.

15. The method according to claim 14, wherein the sending, by the first sub-control unit, second data to the control unit based on the first data comprises:
forwarding, by the first sub-control unit, the first data to the control unit, wherein the first data is the same as the second data.

16. The method according to claim 14, wherein the sending, by the sub-control unit, second data to the control unit based on the first data comprises:
processing, by the first sub-control unit, the first data to obtain the second data, and sending the second data to the control unit, wherein the processing comprises one or more of the following operations: performing data processing on the first data, performing protocol conversion on the first data, encapsulating the first data according to a transmission protocol, and performing data format conversion on the first data.

17. The method according to any one of claims 14 to 16, wherein the first sub-control unit is configured to implement all or some electronic control unit functions of the first component.

18. The method according to any one of claims 14 to 17, wherein the method further comprises:
receiving, by the first sub-control unit, first control information sent by the control unit; and
controlling, by the first sub-control unit, the first component based on the first control information.

19. The method according to any one of claims 14 to 18, wherein the vehicle comprises a mobile data center, a cockpit domain controller, and a vehicle domain controller, and the control unit is connected to at least one of the mobile data center, the cockpit domain controller, or the vehicle domain controller; and
the method further comprises:
the first control information is control information sent by the at least one of the mobile data center, the cockpit domain controller, or the vehicle domain controller to the control unit.

20. A sub-control unit, comprising a processor, a memory, and a network interface, wherein the processor and the memory are interconnected, the network interface is configured to connect to a component and a control unit in the vehicle control system according to any one of claims 1 to 8, the memory is configured to store a computer program, the computer program comprises program instructions, and the processor is configured to run the program instructions to execute the method according to any one of claims 9 to 19.

21. A computer program product comprising instructions, wherein when the computer program product is run on a computer, the computer is enabled to execute the method according to any one of claims 9 to 19.

22. A computer-readable storage medium, comprising instructions, wherein when the instructions are run on a computer, the computer is enabled to execute the method according to any one of claims 9 to 19.

23. An intelligent vehicle, comprising the vehicle control system according to any one of claims 1 to 8.
